# EUROPEAN PATENT APPLICATION

(11) **EP 4 465 503 A1**
(43) Date of publication of application: **20.11.2024**
(21) Application number: 24151773.9
(22) Date of filing: 15.01.2024
(51) Int. Cl.: H02K 15/00, B23P 23/00, B23P 21/00

(54) **CUTTING, LEVELING, WELDING AND TRANSPORTING DEVICES FOR REPAIRING A STATOR WITH HAIRPIN CONDUCTORS**

(30) Priority: 15.05.2023 CN 202310542728
(71) Applicant: UPTEC Intelligent Manufacturing (Wuxi) Co., Ltd., Wuxi City, Jiangsu Province 214000 (CN)
(72) Inventor: YE, Xin, Wuxi City, Jiangsu Province 214000 (CN); XU, Jianhai, Wuxi City, Jiangsu Province 214000 (CN); ZHOU, Liangliang, Wuxi City, Jiangsu Province 214000 (CN); TANG, Shang, Wuxi City, Jiangsu Province 214000 (CN); XU, Lei, Wuxi City, Jiangsu Province 214000 (CN)
(74) Representative: Longoni, Alessandra

(57) **Abstract**

A cutting, levelling and welding device for a hairpin motor includes a material conveying line (1, 120), a material transfer mechanism (10,11), a material conveying rotating disk (2), a tooling picking and placing mechanism (3), a pressing and fitting mechanism (4), a wire cutting mechanism (5), a welding mechanism (6), a locking mechanism, and a stator adjustment mechanism (8). The material conveying rotating disk (8) is provided with working position holes arranged on an outer radius and is capable of rotating to to-be-repaired stators, one in each hole. Tooling picking and placing mechanism (3), pressing and fitting mechanism (4), wire cutting mechanism (5) and welding mechanism (6) are arranged in sequence and above the disk (2) and to-be-repaired stators. said stators are conveyed from the line (1) to the disk (2) by said material transfer mechanism (10,11).

## Description

### FIELD OF TECHNOLOGY

The present invention relates to the technical field of motor production devices, and in particular, to a cutting, leveling, and welding device for a flat wire motor stator.

### BACKGROUND

A flat wire motor, just as the name implies, is a motor in which copper wires are used in a stator winding, the winding is made into a hairpin shape and penetrates a stator slot, and the other end of the hairpin is welded.

When an existing flat wire motor is processed, flat wires of a stator need to be cut, and an end keeps a specified shape while being cut, a tooling needs to be sleeved on the stator to help cut, and then a cut flat wire is conveyed to a welding device for welding.

A processing device for an existing flat wire motor is usually a separate apparatus that is less automatic. For example, an automatic mounting device for a locking tooling of a stator flat copper wire, disclosed in Chinese utility model patent No. CN218775989U previously filed, includes: a first conveying mechanism, a lifting mechanism, a mounting mechanism, a locking mechanism, and a workbench. The mounting mechanism and the locking mechanism are mounted on the workbench through a support frame, and the first conveying mechanism and the lifting mechanism are mounted on the workbench. The first conveying mechanism continually conveys the locking tooling to a position of the lifting mechanism, the mounting mechanism can clamp and lift the locking tooling, a stator iron core is placed at a position of the lifting mechanism, and then the mounting mechanism assemblies the locking tooling to an upper end of the stator iron core. Finally, the locking tooling is automatically locked by using the locking mechanism. However, such apparatus can only lock the tooling to help weld, and cannot meet requirements for steps in a process of locking tooling mounting, cutting, and welding automation, so that cutting and welding need to be performed by using a conveying device or manually, and processing in a next procedure is performed. Therefore, a device that is highly automatic is required for automatically completing locking of the tooling, automatic cutting and welding of the stator, and conveying of a welded stator to a production line.

### SUMMARY

For the foregoing problem, the present invention provides a cutting, leveling, and welding device for a flat wire motor stator, which smoothly resolves a problem that a processing device for an existing flat wire motor is usually a separate apparatus that is less automatic, cannot meet requirements for steps in a process of locking tooling mounting, cutting, and welding automation, and needs to be conveyed for processing in a next procedure by using another conveying device or manually.

To achieve the foregoing purpose, technical solutions used in this application are as follows: a cutting, leveling, and welding device for a flat wire motor stator is provided, including a material conveying line, a material transfer mechanism, a material conveying rotating disk, a tooling picking and placing mechanism, a pressing and fitting mechanism, a wire cutting mechanism, a welding mechanism, a locking mechanism, and a stator adjustment mechanism.

The material conveying line is configured to convey a to-be-processed stator and a processed stator.

The material transfer mechanism is configured to convey the to-be-processed stator on the material conveying line to the material conveying rotating disk and place the processed stator on the material conveying rotating disk back to the material conveying line.

The material conveying rotating disk is provided with working position holes arranged around the material conveying rotating disk, and the material conveying rotating disk is capable of rotating to drive the to-be-processed stator to rotate.

The locking mechanism is disposed in the middle of the material conveying rotating disk and is configured to unlock and lock a tooling.

The tooling picking and placing mechanism is configured to place the tooling on the to-be-processed stator.

The pressing and fitting mechanism is configured to press the tooling to fit the stator. The wire cutting mechanism is configured to cut and level a redundant flat copper wire above the stator.

The welding mechanism is configured to weld a cut and leveled flat copper wire.

The tooling picking and placing mechanism, the pressing and fitting mechanism, the wire cutting mechanism, and the welding mechanism are arranged in sequence around and above the material conveying rotating disk and are corresponding to the working position holes respectively.

The stator adjustment mechanism is located under a working position hole corresponding to the wire cutting mechanism and is configured to lift and rotate the stator. The to-be-processed stators on the material conveying line are continually conveyed to the material conveying rotating disk by using the material transfer mechanism. Through cooperation of the rotating disk with the tooling picking and placing mechanism, wire pressing mechanism, wire cutting mechanism, and welding mechanism above the working position holes, a cutting, leveling, and welding procedure for a flat copper wire on the stator is completed.

Further, the material transfer mechanism is disposed above the material conveying line, the material transfer mechanism includes a horizontal movement module, the horizontal movement module is connected to a double-shaft driving mechanism, and a lower part of the double-shaft driving mechanism is connected to an inner support mechanism located above the material conveying line.

Further, the horizontal movement module includes a first linear module, a second linear module, and a sliding plate connected to one end of the first linear module, the double-shaft driving mechanism is connected to the sliding plate, one end, that is of the first linear module and that is away from the sliding plate, is slidably connected to the second linear module, and the first linear module and the second linear module are vertically arranged. The two vertically arranged first linear module and second linear module drive the double-shaft driving mechanism and the inner support mechanism to perform planar movement, so that the to-be-processed stators can be continually conveyed to a position above the material conveying rotating disk. Further, the double-shaft driving mechanism includes a double-shaft motor firmly mounted on the sliding plate, two output ends of the double-shaft motor are both connected to lifting screw rod modules. Screw rods of the lifting screw rod modules penetrate the sliding plate, and lower ends of the screw rods are both connected to a first mounting plate. Through cooperation of the double-shaft motor with the lifting screw rod modules, rising and falling of the first mounting plate is completed, thereby driving the inner support mechanism to rise and fall.

Further, the inner support mechanism includes a driving apparatus firmly mounted on a lower side surface of the first mounting plate, and an output end of the driving apparatus is connected to a second mounting plate. Inner support cylinders are mounted on lower side surfaces of two ends of the second mounting plate, the inner support cylinders may be inserted into the stator to support the stator, and the driving apparatus is capable of driving the second mounting plate to rotate, so that positions of the inner support cylinders on the lower side surfaces on the two ends of the second mounting plate are exchanged, and when the to-be-processed stator on the material conveying line is picked, the processed stator is placed on the material conveying line.

Further, the locking mechanism is arranged in the middle of the rotating disk, and a lower part of the locking mechanism is provided with a locking and rotating mechanism configured to drive the locking mechanism to rotate. Locking and unlocking of the tooling is automatically completed by using the locking mechanism. The locking and rotating mechanism is configured to rotate the locking mechanism, so that the locking mechanism can be corresponding to working position holes respectively corresponding to the welding mechanism and the tooling picking and placing mechanism.

Further, the stator adjustment mechanism includes a second power source, a fastening frame, a movable plate, a second motor, and a material placing base. An output end of the second power source is connected to a screw rod assembly, the screw rod assembly vertically penetrates the fastening frame, and a lower end of the screw rod assembly is connected to the movable plate. The second motor with an upward output end is provided on the movable plate, and the material placing base is disposed at the output end of the second motor. The material placing base can penetrate the support and move upward. Through cooperation of the power source with the screw rod assembly, the screw rod assembly drives the movable plate to rise and fall. The material placing base on the second motor lifts the stator located on the working position hole when the movable plate rises, and the material placing base is driven by the second motor to rotate, so that the stator rotates, thereby cooperating with the cutting and leveling apparatus to cut a flat copper wire on an upper part of the stator.

Compared with the conventional technologies, the present invention has the following beneficial effects.

According to the present invention, through cooperation with the material conveying line, material transfer mechanism, material conveying rotating disk, tooling picking and placing mechanism, pressing and fitting mechanism, wire cutting mechanism, welding mechanism, locking mechanism, and stator adjustment mechanism, the flat wire motor stator can be automatically loaded, tooling can be automatically mounted, and the flat copper wire can be cut and welded.

### BRIEF DESCRIPTION OF THE DRAWINGS

FIG. 1 is a schematic three-dimensional structural diagram of a front surface of the present invention;

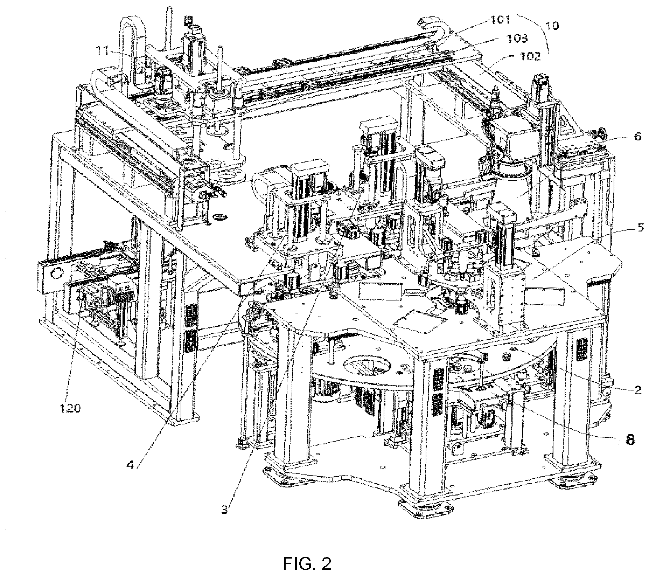

FIG. 2 is a schematic three-dimensional structural diagram of a back surface of the present invention;

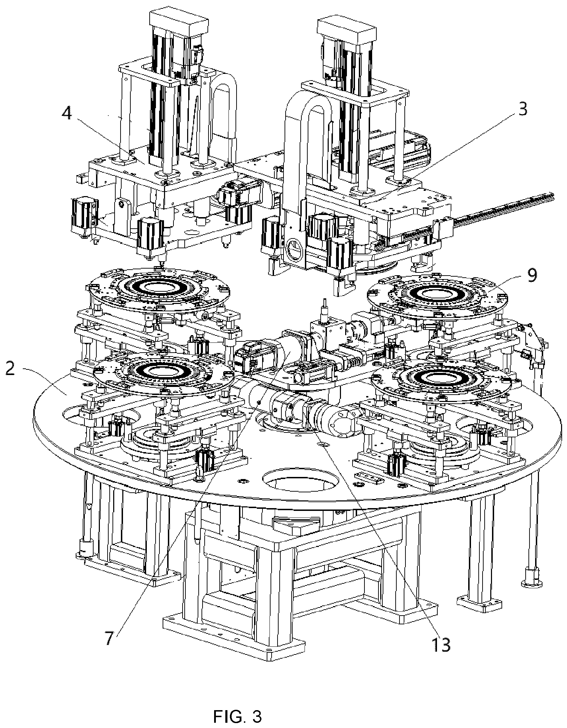

FIG. 3 is a schematic three-dimensional structural diagram of a material conveying rotating disk;

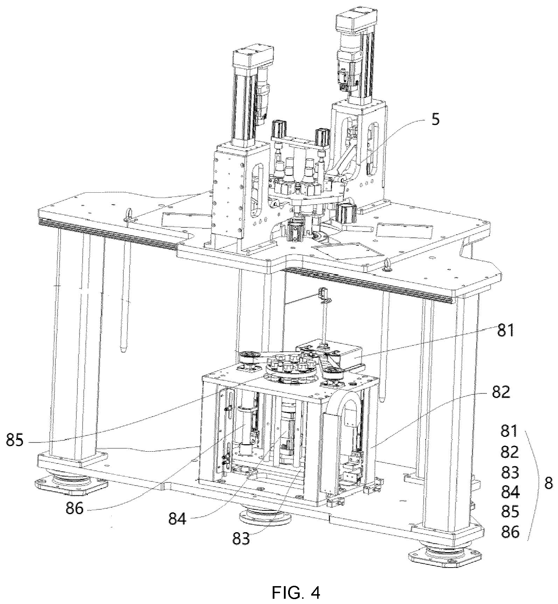

FIG. 4 is a schematic three-dimensional structural diagram of a wire cutting mechanism and a stator adjustment mechanism; and

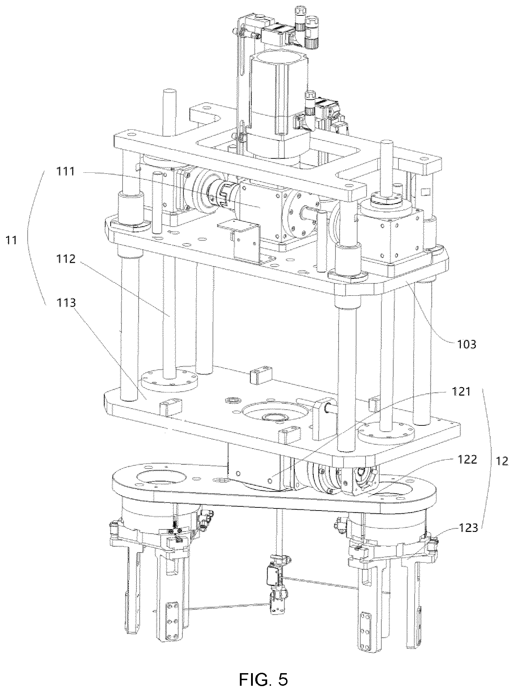

FIG. 5 is a schematic three-dimensional structural diagram of a double-shaft driving mechanism and an inner support mechanism.

In the figures, 1, material conveying line; 120, double-row chain conveying line; 131, lifting apparatus; 2, material conveying rotating disk; 3, tooling picking and placing mechanism; 4, pressing and fitting mechanism; 5, wire cutting mechanism; 6, welding mechanism; 7, locking mechanism; 8, stator adjustment mechanism; 81, second power source; 82, fastening frame; 83, movable plate; 84, second motor; 85, material placing base; 86, screw rod assembly; 9, tooling; 10, horizontal movement module; 101, first linear module; 102, second linear module; 103, sliding plate; 11, double-shaft driving mechanism; 111, double-shaft motor; 112, lifting screw rod module; 113, first mounting plate; 12, inner support mechanism; 121, driving apparatus; 122, second mounting plate; 123, inner support cylinder; 13, locking and rotating mechanism.

### DESCRIPTION OF THE EMBODIMENTS

The technical solutions of the embodiments of the present invention are clearly and completely described below with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention as claimed.

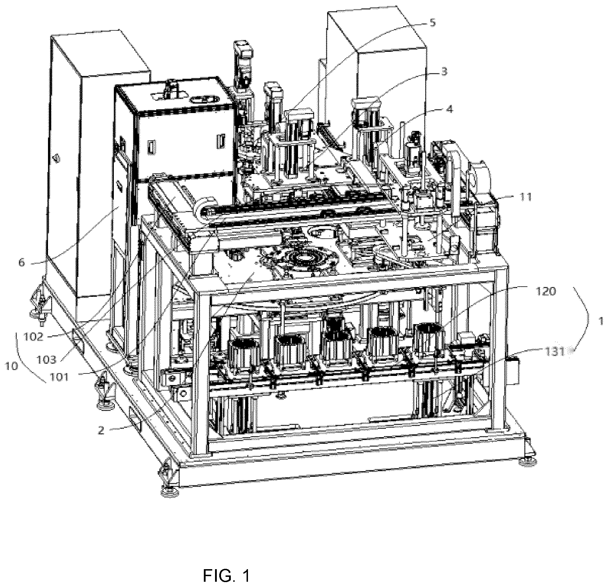

As shown in FIG. 1, a cutting, leveling, and welding device for a flat wire motor stator is provided, including a material conveying line 1, a material transfer mechanism, a material conveying rotating disk 2, a tooling picking and placing mechanism 3, a pressing and fitting mechanism 4, a wire cutting mechanism 5, a welding mechanism 6, a locking mechanism 7, and a stator adjustment mechanism 8.

The material conveying line 1 is configured to convey a to-be-processed stator and a processed stator. The material conveying line 1 includes a double-row chain conveying line 120 and a lifting apparatus 131. Two ends of the double-row chain conveying line 120 are connected to a conveying line of a device for another process or procedure. The lifting apparatus 131 is disposed below two ends of a wire body. The lifting apparatus 131 is a cylinder, and an output end of the cylinder is upward. The material transfer mechanism is configured to convey the to-be-processed stator on the material conveying line 1 to the material conveying rotating disk 2 and place the processed stator on the material conveying rotating disk 2 back to the material conveying line 1.

The material conveying rotating disk 2 is provided with four working position holes arranged around the material conveying rotating disk 2. The material conveying rotating disk 2 can rotate to drive the to-be-processed stator to rotate. The material conveying rotating disk 2 includes a power source located below. The power source is a stepper motor, and a rotating support is disposed below the material conveying rotating disk 2. An output end of the stepper motor is connected to the rotating support for driving the material conveying rotating disk 2 to rotate intermittently.

The locking mechanism 7 is disposed in the middle of the material conveying rotating disk 2 for unlocking and locking a tooling 9. The locking mechanism 7 has a same structure as a locking mechanism 7 disclosed in the utility model patent No. CN218775989U, a principle for the used tooling 9 is the same as a principle for a tooling disk disclosed in the utility model patent No. CN218775989U, and unlocking and locking principles for the tooling 9 are also the same and are not modified, which are not described in detail herein.

The tooling picking and placing mechanism 3 is configured to place the tooling 9 on the to-be-processed stator. The tooling picking and placing mechanism 3 is the same as a mounting mechanism disclosed in the utility model patent No. CN218775989U, and a principle for a picking and placing tooling 9 is the same, which is not modified and not described in detail in this application.

The pressing and fitting mechanism 4 is configured to press the tooling 9 to fit the stator. A difference between the pressing and fitting mechanism 4 and the mounting mechanism disclosed in the utility model patent number CN218775989U is that the pressing and fitting mechanism 4 is not provided with a stopper that is provided with a pressing and fitting mechanism 4.

The wire cutting mechanism 5 is configured to cut and level a redundant flat copper wire above the stator.

The welding mechanism 6 is configured to weld a cut and leveled flat copper wire.

The tooling picking and placing mechanism 3, the pressing and fitting mechanism 4, the wire cutting mechanism 5, and the welding mechanism 6 are arranged in sequence around and above the material conveying rotating disk 2 and are corresponding to the four working position holes respectively. A device support is disposed above the material conveying line 1. The material transfer mechanism, the tooling picking and placing mechanism 3, the pressing and fitting mechanism 4, and the welding mechanism 6 are all mounted on the device support. A separate workbench for the wire cutting mechanism 5 is disposed below the wire cutting mechanism 5.

The stator adjustment mechanism 8 is located under a working position hole corresponding to the wire cutting mechanism 5 and is configured to lift and rotate the stator.

In this embodiment, the material transfer mechanism is disposed on the device support above the material conveying line 1. The material transfer mechanism includes a horizontal movement module 10, and the horizontal movement module 10 is connected to a double-shaft driving mechanism 11. A lower part of the double-shaft driving mechanism 11 is connected to an inner support mechanism 12 located above the material conveying line 1.

In this embodiment, the horizontal movement module 10 includes a first linear module 101, a second linear module 102, and a sliding plate 103 connected to one end of the first linear module 101. The double-shaft driving mechanism 11 is firmly connected to the sliding plate 103 through a screw, and one end that is of the first linear module 101 and that is away from the sliding plate 103 is slidably connected to the second linear module 102. The first linear module 101 and the second linear module 102 are arranged vertically, and the two vertically arranged first linear module and second linear module drive the double-shaft driving mechanism 11 and the inner support mechanism 12 to perform planar movement.

In this embodiment, the double-shaft driving mechanism 11 includes a double-shaft motor 111 firmly mounted on the sliding plate 103. Two output ends of the double-shaft motor 111 are both connected to lifting screw rod modules 112. Screw rods of the lifting screw rod modules 112 penetrate the sliding plate 103 and lower ends of the screw rods are both connected to a first mounting plate 113. Four sliding rods for guidance are provided on edges of the sliding plate 103 and the first mounting plate 113.

In this embodiment, the inner support mechanism 12 includes a driving apparatus 121 firmly mounted on a lower side surface of the first mounting plate 113. The driving apparatus 121 is a motor. An output end of the driving apparatus 121 faces downward and is firmly connected to a second mounting plate 122. An inner support cylinder 123 is firmly mounted on lower side surfaces of two ends of the second mounting plate 122. Three clamping jaws extending outward controlled by the cylinder are disposed below the inner support cylinder 123.

In this embodiment, a round hole is provided in the middle of the material conveying rotating disk 2, and the locking mechanism 7 is disposed in the middle of the material conveying rotating disk 2. A locking and rotating mechanism 13 configured to drive the locking mechanism 7 to rotate is mounted on a lower part of the locking mechanism 7. The locking and rotating mechanism 13 is a rotating speed reducer. In this embodiment, the stator adjustment mechanism 8 includes a second power source 81, a fastening frame 82, a movable plate 83, a second motor 84, and a material placing base 85. An output end of the second power source 81 is connected to two screw rod assemblies 86 through a belt conveying. The screw rod assemblies 86 vertically penetrate the fastening frame 82, and lower ends of the screw rod assemblies 86 are connected to the movable plate 83. The second motor 84 with an upward output end is firmly mounted on the movable plate 83. A material placing base 85 is firmly mounted on an output end of the second motor 84 by using a screw. A round hole which the material placing base 85 penetrates is provided in an upper part of the support.

When the present invention is used, after the to-be-processed stator is conveyed to a designated position through the double-row chain conveying line 120, the to-be-processed stator is lifted by the lifting apparatus 131. In this case, one inner support cylinder 123 on a lower side surface of the second mounting plate 122 is located directly above the to-be-processed stator, and a clamping jaw of the inner support cylinder 123 is in a retraction state. After the to-be-processed stator is lifted, the to-be-processed stator is inserted into the clamping jaw, and the inner support cylinder 123 controls the clamping jaw to extend to support the to-be-processed stator. In this case, the driving apparatus 121 controls the second mounting plate 122 to rotate. The other inner support cylinder 123 of the second mounting plate 122 carries a processed stator removed from the material conveying rotating disk 2, so that a position of an unprocessed stator and a position of the processed stator are exchanged. The inner support cylinder 123 controls a clamping jaw in the processed stator to retract, and the lifting apparatus 131 drives the processed stator to drop and fall on the double-row chain conveying line 120. In this case, the double-shaft driving motor drives the lifting screw rod module 112 to move the mounting plate upward, and the first linear module 101 and the second linear module 102 enable the inner support mechanism 12 to be located above a material conveying mechanism and above the processed stator, and the double-shaft driving motor is controlled to drive the lifting screw rod module 112 to move the mounting plate downward. The inner support mechanism 12 repeatedly exchanges a position of a to-be-processed stator and a position of a processed stator, so that the to-be-processed stator is placed on a working position hole of the material conveying rotating disk 2. This step is repeated to complete cyclic loading and unloading.

The tooling picking and placing mechanism 3 places the tooling 9 on an upper end of the stator, and the material conveying rotating disk 2 is driven by the power source to rotate, so that the to-be-processed stator is under the pressing and fitting mechanism 4. The pressing and fitting mechanism 4 presses down to enable the tooling 9 to closely fit an upper part of the stator. In this case, the locking mechanism 7 faces the tooling 9 that is pressed. After the locking mechanism 7 locks the tooling 9, the locking and rotating mechanism 13 enables the locking mechanism 7 to be opposite to a working position hole corresponding to the tooling picking and placing mechanism 3. A processed stator is provided in the working position hole, the tooling 9 with the processed stator is unlocked by using the locking mechanism 7. This step is repeated to complete automatic mounting and locking of the tooling 9.

The material conveying rotating disk 2 continues to rotate, so that the stator with the locking tooling 9 is located above the stator adjustment mechanism 8. An output end of the second power source 81 drives the screw rod assembly 86 to lift the second motor 84. In this case, the material placing base 85 on the second motor 84 lifts up the stator located on the working position hole when the movable plate 83 rises, and the material placing base 85 is driven by the second motor 84 to rotate, so that the stator rotates, thereby cooperating the cutting and leveling apparatus to cut a flat copper wire on an upper part of the stator.

The material conveying rotating disk 2 continues to rotate, so that the stator, after the cutting procedure is completed, is located under the welding apparatus. After the welding apparatus completes welding, the stator is conveyed to an initial position of the material conveying rotating disk 2, so that cutting, leveling, and welding of the stator is completed.

Although the present invention is described in detail with reference to the foregoing embodiments, a person skilled in the art may still modify the technical solutions described in the foregoing embodiments, or perform equivalent replacement on some of the technical features. Any modification, equivalent replacement, improvement, or the like performed within the spirit and principles of the present invention shall fall within the protection scope of the present invention as claimed.

## Claims

1. A cutting, leveling, and welding device for a flat wire motor stator, **characterized by** comprising a material conveying line (1), a material transfer mechanism, a material conveying rotating disk (2), a tooling picking and placing mechanism (3), a pressing and fitting mechanism (4), a wire cutting mechanism (5), a welding mechanism (6), a locking mechanism (7), and a stator adjustment mechanism (8), wherein
the material conveying line (1) is configured to convey a to-be-processed stator and a processed stator;
the material transfer mechanism is configured to convey the to-be-processed stator on the material conveying line (1) to the material conveying rotating disk (2) and place the processed stator on the material conveying rotating disk (2) back to the material conveying line (1);
the material conveying rotating disk (2) is provided with working position holes arranged around the material conveying rotating disk (2), and the material conveying rotating disk (2) is capable of rotating to drive the to-be-processed stator to rotate; the locking mechanism (7) is disposed in the middle of the material conveying rotating disk (2) and is configured to unlock and lock a tooling (9);
the tooling picking and placing mechanism (3) is configured to place the tooling (9) on the to-be-processed stator;
the pressing and fitting mechanism (4) is configured to press the tooling (9) to fit the stator;
the wire cutting mechanism (5) is configured to cut and level a redundant flat copper wire above the stator;
the welding mechanism (6) is configured to weld a cut and leveled flat copper wire; the tooling picking and placing mechanism (3), the pressing and fitting mechanism (4), the wire cutting mechanism (5), and the welding mechanism (6) are arranged in sequence around and above the material conveying rotating disk (2) and are corresponding to the working position holes respectively; and
the stator adjustment mechanism (8) is located under a working position hole corresponding to the wire cutting mechanism (5) and is configured to lift and rotate the stator.

2. The cutting, leveling, and welding device for a flat wire motor stator according to claim 1, **characterized in that** the material transfer mechanism is disposed above the material conveying line (1), the material transfer mechanism comprises a horizontal movement module (10), the horizontal movement module (10) is connected to a double-shaft driving mechanism (11), a lower part of the double-shaft driving mechanism (11) is connected to an inner support mechanism (12) located above the material conveying line (1).

3. The cutting, leveling, and welding device for a flat wire motor stator according to claim 2, **characterized in that** the horizontal movement module (10) comprises a first linear module (101), a second linear module (102), and a sliding plate (103) connected to one end of the first linear module (101), the double-shaft driving mechanism (11) is connected to the sliding plate (103), one end that is of the first linear module (101) and that is away from the sliding plate (103) is slidably connected to the second linear module (102), and the first linear module (101) and the second linear module (102) are vertically arranged.

4. The cutting, leveling, and welding device for a flat wire motor stator according to claim 3, **characterized in that** the double-shaft driving mechanism (11) comprises a double-shaft motor (111) firmly mounted on the sliding plate (103), two output ends of the double-shaft motor (111) are both connected to lifting screw rod modules (112), and screw rods of the lifting screw rod modules (112) penetrate the sliding plate (103) and lower ends of the screw rods are both connected to a first mounting plate (113).

5. The cutting, leveling, and welding device for a flat wire motor stator according to claim 4, **characterized in that** the inner support mechanism (12) comprises a driving apparatus (121) firmly mounted on a lower side surface of the first mounting plate (113), and an output end of the driving apparatus (121) is connected to a second mounting plate (122), inner support cylinders (123) are mounted on lower side surfaces of two ends of the second mounting plate (122), and the driving apparatus (121) is capable of driving the second mounting plate (122) to rotate.

6. The cutting, leveling, and welding device for a flat wire motor stator according to claim 1, **characterized in that** the locking mechanism (7) is disposed in the middle of the rotating disk, and a locking and rotating mechanism (13) configured to drive the locking mechanism (7) to rotate is mounted on a lower part the locking mechanism (7).

7. The cutting, leveling, and welding device for a flat wire motor stator according to claim 1, **characterized in that** the stator adjustment mechanism (8) comprises a second power source (81), a fastening frame (82), a movable plate (83), a second motor (84), and a material placing base (85), an output end of the second power source (81) is connected to a screw rod assembly (86), the screw rod assembly (86) vertically penetrates the fastening frame (82) and a lower end of the screw rod assembly (86) is connected to the movable plate (83), the second motor (84) with an upward output end is provided on the movable plate (83), and the material placing base (85) is disposed at the output end of the second motor (84).
